# EUROPEAN PATENT APPLICATION

(11) **EP 4 067 401 A1**
(43) Date of publication of application: **05.10.2022**
(21) Application number: 21165840.6
(22) Date of filing: 30.03.2021
(51) Int. Cl.: C08G 18/08, B32B 27/40, C08G 18/24, C08G 18/32, C08G 18/36, C08G 18/40, C08G 18/42, C08G 18/48, C08G 18/66, C08G 18/76, C08K 3/00, C08K 7/28, C08L 75/04, C09J 175/04, B32B 7/12, C08K 5/3445, C09J 9/02

(54) **TWO COMPONENT (2K) CURABLE ADHESIVE COMPOSITION**

(71) Applicant: Henkel AG & Co. KGaA, 40589 Düsseldorf (DE)
(72) Inventor: Stapf, Stefanie, 45239 Essen (DE); Veit, Elke, 52428 Jülich (DE); Tophoven, Niklas, 41749 Viersen (DE); Keller, Hannes, 40227 Düsseldorf (DE); Moeller, Thomas, 40593 Düsseldorf (DE); Sundermeier, Uta, 42799 Leichlingen (DE)

(57) **Abstract**

The present invention is directed to a curable and electrochemically debondable two-component (2K) adhesive composition comprising:
a first component comprising:
i) at least one polyol selected from the group consisting of fatty alcohols, polyester polyols, polyether polyols, polyether-polyester polyols and polycarbonate polyols;
ii) optionally further active hydrogen compounds; and,
iii) non-polymerizable electrolyte; and,

a second component comprising at least one polyisocyanate,
wherein said composition is characterized in that the molar equivalents ratio of NCO groups to active hydrogen atoms is at least 1:1.

## Description

### FIELD OF THE INVENTION

The present invention is directed to an adhesive composition which can be debonded from particular substrates to which it is applied. More particularly, the present invention is directed to a two-component (2K) curable and electrochemically debondable polyurethane adhesive composition.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature - such as disclosed in US Patent No. 4,171,240 (Wong) and US Patent No. 4,729,797 (Linde et al.) - might be effective but can be time consuming and complex to perform: moreover, the aggressive chemicals and / or harsh conditions required can damage the substrates being separated, rendering them unsuitable for subsequent applications.

Noting these problems, certain authors have sought to develop electrochemically debondable adhesive compositions, wherein the passage of an electrical current through the cured compositions acts to disrupt the bonding at the interface of the adhesive and the substrate.

US Patent No. 7,465,492 (Gilbert) describes an electrochemically disbondable composition comprising: a matrix functionality comprising a monomer selected from the group consisting of acrylics, methacrylics and combinations thereof; a free radical initiator; and, an electrolyte, wherein the electrolyte provides sufficient ionic conductivity to said composition to support a faradaic reaction at a bond formed between the composition and an electrically conductive surface and thus allows the composition to disbond from the surface.

US 2007/0269659 (Gilbert) describes an adhesive composition disbondable at two interfaces, the composition: (i) comprising a polymer and an electrolyte; (ii) facilitating joinder of two surfaces; and, (iii) in response to a voltage applied across both surfaces so as to form an anodic interface and a cathodic interface, disbonding from both the anodic and cathodic surfaces.

WO2007/142600 (Stora Enso AB) describes an electrochemically weakened adhesive composition which provides an adhesive bond to an electrically conducting surface and sufficient ion conductive properties to enable a weakening of said adhesive bond at the application of a voltage across the adhesive composition, wherein said composition comprises at least one ionic compound in an effective amount to give said ion conductive properties and wherein said ionic compound has a melting point of no more than 120°C.

EP 3363875 A (Nitto Denko Corporation) provides an electrically peelable adhesive composition that forms an adhesive layer which has high adhesion and can be easily peeled off upon application of a voltage for a short time. The electrically peelable adhesive composition of the invention includes a polymer and from 0.5 to 30 wt.%, based on the weight of the polymer, of an ionic liquid, wherein the anion of the ionic liquid is a bis(fluorosulfonyl)imide anion.

WO2017/133864 (Henkel AG & Co. KGaA) describes a method for reversibly bonding a first and a second substrate, wherein at least the first substrate is an electrically non-conductive substrate, the method comprising: a) coating the surface of the electrically non-conductive substrate(s) with a conductive ink; b) applying an electrically debondable hot melt adhesive composition to the conductive ink-coated surface of the first substrate and / or the second substrate; c) contacting the first and the second substrates such that the electrically debondable hot melt adhesive composition is interposed between the two substrates; d) allowing formation of an adhesive bond between the two substrates to provide bonded substrates; and, e) applying a voltage to the bonded substrates whereby adhesion at an interface between the electrically debondable hot melt adhesive composition and a substrate surface is substantially weakened.

WO2013/135677 (Henkel AG & Co. KGaA) describes a hot melt adhesive containing: from 20 to 90 wt % of at least one polyamide having a molecular weight (Mw) from 10,000 to 250,000 g/mol; from 1 to 25 wt % of at least one organic or inorganic salt; and, from 0 to 60 wt % of further additives, wherein the adhesive has a softening point from 100°C to 220°C.

US 2008/0196828 (Gilbert) describes a hot-melt adhesive composition comprising: a thermoplastic component; and, an electrolyte, wherein the electrolyte provides sufficient ionic conductivity to the composition to enable a faradaic reaction at a bond formed between the composition and an electrically conductive surface and to allow the composition to disbond from the surface.

WO2016/135341 (Henkel AG & Co. KGaA) describes a reactive hot melt adhesive composition which at least partially loses its adhesiveness upon application of an electric voltage and thus allows debonding of substrates that have been bonded using said adhesive. More particularly, the reactive hot melt adhesive composition comprises: a) at least one isocyanate-functional polyurethane polymer; and, b) at least one organic or inorganic salt.

It is known in the art that the use of polyurethanes in structural adhesives can present a number of advantages. In particular, the durability, hardness and modulus of polyurethanes can be readily tailored to a particular application. Moreover, polyurethanes can provide *inter alia:* temperature stability; resilience; elastomeric memory; vibration dampening; sound dampening; solvent resistance; hydrolytic stability; and, coloration tolerance. That acknowledged, the electrochemically debondable adhesive of WO2016/135341 (Henkel AG & Co. KGaA) applies a preformed polyurethane polymer within a hot melt adhesive: this presents the disadvantages that the application of the polyurethane adhesive requires specialized equipment and the efficacy of the adhesive is sensitive to application temperature.

There remains a need in the art to provide a curable polyurethane adhesive composition which can be conveniently applied to the surfaces of substrates to be bonded, which upon curing thereof can provide an effective bond within composite structures containing said substrates but which can be effectively de-bonded from those substrates by the facile application of an electrical potential across the cured adhesive.

### STATEMENT OF THE INVENTION

In accordance with a first aspect of the invention, there is provided a curable and electrochemically debondable two-component (2K) adhesive composition comprising:
a first component comprising:
   i) at least one polyol selected from the group consisting of fatty alcohols, polyester polyols, polyether polyols, polyether-polyester polyols and polycarbonate polyols;
   ii) optionally further active hydrogen compounds; and,
   iii) non-polymerizable electrolyte; and,
a second component comprising at least one polyisocyanate,
wherein said composition is characterized in that the molar equivalents ratio of NCO groups to active hydrogen atoms is at least 1:1. Where the molar equivalents ratio is greater than 1:1, the stoichiometric excess of isocyanate (NCO) groups results in the formation of an NCO-functional polymer upon reaction of the first and second components.

The curable and electrochemically debondable two-component (2K) adhesive composition preferably comprises, based on the weight of the composition:
a first component comprising:
   from 20 to 80 wt.%, preferably from 20 to 60 wt.% of i) at least one polyol selected from the group consisting of fatty alcohols, polyester polyols, polyether polyols, polyether-polyester polyols and polycarbonate polyols;
      ii) optionally further active hydrogen compounds; and,
   from 1 to 20 wt.%, preferably from 1 to 10 wt.% of iii) non-polymerizable electrolyte;
a second component comprising at least one polyisocyanate,
wherein said composition is characterized in that the molar equivalents ratio of NCO groups to active hydrogen atoms is from 1:1 to 1.2:1.

Good results have been obtained where the curable and electrochemically debondable two-component (2K) adhesive composition comprises, based on the weight of the composition:
a first component comprising:
   from 20 to 80 wt.%, preferably from 20 to 60 wt.% of i) at least one polyol selected from the group consisting of fatty alcohols, polyester polyols, polyether polyols, polyether-polyester polyols and polycarbonate polyols;
      ii) optionally further active hydrogen compounds; and
   from 1 to 20 wt.%, preferably from 1 to 10 wt.% of iii) non-polymerizable electrolyte, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts.
a second component comprising iv) at least one polyisocyanate,
wherein said composition further comprises, based on the weight of the composition:
from 0.5 to 5 wt.% of (v) at least one additive selected from the group consisting of: morin(2-(2,4-dihydroxy phenyl)-3,5,7-trihydroxy-4H-1-cumarone-4-ketone); 3,7-dihydroxy-2-naphthoic acid; pyrogallol carboxylic acid; 3,4-dihydroxy-benzene guanidine-acetic acid; gallic acid; para-aminosalicylic acid; 4,4'-methylene-bis(3-hydroxy-2-naphthoic acid; and, citric acid;
from 0.005 to 5 wt.%, preferably from 0.1 to 1 wt.% of catalyst; and,
from 0.5 to 10 wt.% of electrically non-conductive particulate filler,
further wherein said composition is characterized in that the molar equivalents ratio of NCO groups to active hydrogen atoms is from 1:1 to 1.2:1.

Whilst it is not strictly necessary, the aforementioned catalyst will normally be formulated in the first, polyol component of the composition.

In accordance with a second aspect of the invention, there is provided a bonded structure comprising:
a first material layer having an electrically conductive surface; and,
a second material layer having an electrically conductive surface,
wherein the cured electrochemically debondable two-component (2K) adhesive composition as defined hereinabove and in the appended claims is disposed between said first and second material layers.

In accordance with a third aspect of the present invention, there is provided a method of debonding said bonded structure as defined hereinabove and in the appended claims, the method comprising the steps of:
i) applying a voltage across both surfaces to form an anodic interface and a cathodic interface; and,
ii) debonding the surfaces.

Step i) of this method is preferably characterized by at least one of:
a) an applied voltage of from 0.5 to 200 V; and,
b) the voltage being applied for a duration of from 1 second to 60 minutes.

The adhesive property of the composition is disrupted by the application of an electrical potential across the bondline between that composition and the conductive surfaces. Without intention to be bound by theory, it is considered that the faradaic reactions which take place at the interface between the adhesive composition and the conductive surfaces disrupt the interaction between the adhesive and the substrate, thereby weakening the bond therebetween. That interfacial disruption may be the consequence of one or more processes, for instance chemical degradation of the debondable material, gas evolution at the interface and / or material embrittlement though changes to the crosslink density of the adhesive composition.

### DEFINITIONS

As used herein, the singular forms "a", *"an"* and *"the"* include plural referents unless the context clearly dictates otherwise.

The terms *"comprising", "comprises"* and *"comprised* of" as used herein are synonymous with *"including", "includes", "containing"* or *"contains",* and are inclusive or open-ended and do not exclude additional, non-recited members, elements or method steps.

As used herein, the term *"consisting of'* excludes any element, ingredient, member or method step not specified.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to* x" specifically includes 0 wt.%: the ingredient defined by said range may be absent from the composition or may be present in the composition in an amount up to x wt.%.

The words *"preferred", "preferably", "desirably"* and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature is 23°C plus or minus 2°C. As used herein, *"ambient conditions"* means the temperature and pressure of the surroundings in which the composition is located or in which a coating layer or the substrate of said coating layer is located.

The molecular weights referred to in this specification - to describe to macromolecular, oligomeric and polymeric components of the curable compositions - can be measured with gel permeation chromatography (GPC) using polystyrene calibration standards, such as is done according to ASTM 3536.

Viscosities of the coating compositions described herein are, unless otherwise stipulated, measured using the Brookfield Viscometer at standard conditions of 20°C and 50% Relative Humidity (RH). The method of calibration, the spindle type and rotation speed of the Brookfield Viscometer are chosen according to the instructions of the manufacturer as appropriate for the composition to be measured.

*"Two-component (2K) compositions"* in the context of the present invention are understood to be compositions in which a first component (A) and a second component (B) must be stored in separate vessels because of their (high) reactivity. The two components are mixed only shortly before application and then react, typically without additional activation, with bond formation and thereby formation of a polymeric network. Herein higher temperatures may be applied in order to accelerate the cross-linking reaction.

As used herein the term *"electrochemically debondable"* means that, after curing of the adhesive, the bond strength can be weakened by at least 50% upon application of an electrical potential of 70V for a duration of 20 minutes. The cured adhesive is applied between two substrates which are bonded by said adhesive so that an electric current is running through the adhesive bond line. Bond strength is measured by Tensile Lap Shear (TLS) test performed at room temperature and based upon ASTM D3163-01 *Standard Test Method for Determining Strength of Adhesively Bonded Rigid Plastic Lap-Shear Joints in Shear by Tension Loading.* The bond overlapping area was 2.50 cm x 1.25 cm (1" x 0.5") with a bond thickness of 0.1 cm (40 mil).

As used herein, the term *"monomer"* refers to a substance that can undergo a polymerization reaction to contribute constitutional units to the chemical structure of a polymer. The term "*monofunctional*", as used herein, refers to the possession of one polymerizable moiety. The term *"polyfunctional",* as used herein, refers to the possession of more than one polymerizable moiety.

As used herein, the term *"equivalent (eq.*"*)* relates, as is usual in chemical notation, to the relative number of reactive groups present in the reaction.

As used herein, an *"active hydrogen compound"* is a compound that has at least one active hydrogen functional group. Such a functional group includes at least one hydrogen atom that may be readily dissociated therefrom. Preferably, said hydrogen atom is attached to a nitrogen atom, an oxygen atom, a phosphorous atom, or a sulfur atom and, as such, exemplary active hydrogen functional groups are hydroxyl functional groups, amino functional groups and thiol functional groups.

As used herein, "*polyol*" refers to any compound comprising two or more hydroxyl groups: the term is thus intended to encompass diols, triols and compounds containing four or more -OH groups.

As used herein the term "*fatty*" means any compound that contains one or more residues of fatty acids. *"Fatty acid"* in turn denotes any predominately unbranched, non-cyclic (preferably substantially linear) aliphatic carboxylic acid that substantially comprises, preferably consists of an aliphatic hydrocarbon chain and at least one carboxyl group, preferably a single terminal carboxyl group. Fatty acids may comprise a limited number of other substituents such as hydroxyl and may be saturated, mono-unsaturated or poly-unsaturated.

The term *"electrolyte"* is used herein in accordance with its standard meaning in the art as a substance containing free ions which can conduct electricity by displacement of charged carrier species. The term is intended to encompass molten electrolytes, liquid electrolytes, semi-solid electrolytes and solid electrolytes wherein at least one of the cationic or anionic components of their electrolyte structure is essentially free for displacement, thus acting as charge carrier.

The curable adhesive compositions of the present invention and the cured adhesives obtained therefrom possess *"electrolyte functionality"* in that the adhesive material permits the conduction of ions, either anions, cations or both. The electrolyte functionality is understood to derive from the ability of the compositions and cured adhesives to solvate ions of at least one polarity.

The term *"faradaic reaction"* means an electrochemical reaction in which a material is oxidized or reduced.

As used herein, "*(meth)acryl*" is a shorthand term referring to "*acryl*" and/or "*methacryl*"*.* Thus the term *"(meth)acrylate"* refers collectively to acrylate and methacrylate.

As used herein, "*C₁*-*Cₙ alkyl*" group refers to a monovalent group that contains 1 to n carbons atoms, that is a radical of an alkane and includes straight-chain and branched organic groups. As such, a "*C₁-C₁₈alkyl*" group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term "*C₁-C₁₈hydroxyalkyl*" as used herein refers to a HO-(alkyl) group having from 1 to 18 carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term "*C₁*-*C₁₈ alkoxyalkyl*" as used herein refers to an alkyl group having an alkoxy substituent as defined above and wherein the moiety *(alkyl-O-alkyl)* comprises in total from 1 to 18 carbon atoms: such groups include methoxymethyl (-CH₂OCH₃), 2-methoxyethyl (-CH₂CH₂OCH₃) and 2-ethoxyethyl.

The term "*C₂-C₄ alkylene"* as used herein, is defined as saturated, divalent hydrocarbon radical having from 2 to 4 carbon atoms.

The term "*C₃*-*C₁₈ cycloalkyl*" is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, an "*C₆-C₁₈ aryf'* group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, "*C₂-C₂₄ alkenyl*" refers to hydrocarbyl groups having from 2 to 24 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "*E*" and "*Z*' configurations, as appreciated by those of ordinary skill in the art. In general, however, a preference for unsubstituted alkenyl groups containing from 2 to 10 (C₂₋₁₀) or 2 to 8 (C₂₋₈) carbon atoms should be noted. Examples of said C₂-C₁₂ alkenyl groups include, but are not limited to: -CH=CH₂; -CH=CHCH₃; -CH₂CH=CH₂; -C(=CH₂)(CH₃); - CH=CHCH₂CH₃; -CH₂CH=CHCH₃; -CH₂CH₂CH=CH₂; -CH=C(CH₃)₂; -CH₂C(=CH₂)(CH₃); - C(=CH₂)CH₂CH₃; -C(CH₃)=CHCH₃; -C(CH₃)CH=CH₂; -CH=CHCH₂CH₂CH₃; - CH₂CH=CHCH₂CH_{3;} -CH₂CH₂CH=CHCH₃; -CH₂CH₂CH₂CH=CH₂; -C(=CH₂)CH₂CH₂CH₃; - C(CH₃)=CHCH₂CH₃; -CH(CH₃)CH=CHCH; -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, "*alkylaryl*" refers to alkyl-substituted aryl groups, both radicals as defined hereinabove. Further, as used herein "*aralkyl*" means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. "*Heteroalkyl*", "*heterocycloalkyl*" and "*heteroaryl*" moieties are alkyl, cycloalkyl and aryl groups as defined hereinabove, respectively, containing N, O, Si or S as part of their structure.

The present compositions may be defined herein as being *"substantially free"* of certain compounds, elements, ions or other like components. The term *"substantially free"* is intended to mean that the compound, element, ion or other like component is not deliberately added to the composition and is present, at most, in only trace amounts which will have no (adverse) effect on the desired properties of the coating. An exemplary trace amount is less than 1000 ppm by weight of the composition. The term *"substantially free"* encompasses those embodiments where the specified compound, element, ion, or other like component is completely absent from the composition or is not present in any amount measurable by techniques generally used in the art.

### DETAILED DESCRIPTION OF THE INVENTION

### 1. First Component of the Two-Component (2K) Composition

The first component of the composition comprises: i) at least one polyol selected from the group consisting of fatty alcohols, polyester polyols, polyether polyols, polyether-polyester polyols and polycarbonate polyols; ii) optionally further active hydrogen compounds; and, iii) non-polymerizable electrolyte. It is repeated that the composition of the present invention is characterized in that the molar equivalents ratio of NCO groups - of the reactants provided by the second part of the composition - to the active hydrogen atoms is at least 1:1, for example from 1:1 to 1.5:1 and preferably from 1:1 to 1.2:1. The first component of the composition may be further characterized by comprising from 20 to 80 wt.%, for example from 20 to 60 wt.%, of i) said at least one polyol selected from the group consisting of fatty alcohols, polyester polyols, polyether polyols, polyether-polyester and polycarbonate polyols.

### i) Polyol(s)

At least one reactant polyol of the two component (2K) composition must be selected from the group consisting of: fatty alcohols, polyester polyols, polyether polyols, polyether-polyester polyols and polycarbonate polyols. Such a polyol or polyols should preferably have a number average molecular weight (Mn) of from 200 to 50,000 g/mol, for instance from 200 to 8000 g/mol. Alternatively or additional to this molecular weight characterization, the hydroxyl number of the reactant polyol(s) should preferably be from 2 to 850 mg KOH/g, for instance from 25 to 500 mg KOH/g.

Polycarbonate diols may be obtained by reacting carbonic acid derivatives with diols. Exemplary carbonic acid derivatives are diaryl carbonates including but not limited to diphenyl carbonate, di(Ci-C₆)alkyl carbonates and phosgene. Exemplary diols include but are not limited to: ethylene glycol; 1,2-propanediol; 1,3-propanediol; 1,3-butanediol; 1,4-butanediol; 1,5-pentanediol; 1,6-hexanediol; cyclohexane dimethanol; diethylene glycol; dipropylene glycol; neopentylglycol; and, mixtures thereof.

Polyester diols may be obtained by reacting diols with either aliphatic, aromatic or cycloaliphatic dicarboxylic acids or, in some circumstances, the corresponding anhydrides thereof: the reaction may optionally take place in the presence of an esterification catalyst. Examples of suitable dicarboxylic acids include but are not limited to: adipic acid; glutaric acid; pimelic acid; suberic acid; nonanedicarboxylic acid; decanedicarboxylic acid; succinic acid; maleic acid; sebacic acid; azelaic acid; terephthalic acid; isophthalic acid; o-phthalic acid; tetrahydrophthalic acid; hexahydrophthalic acid; trimellitic acid; and, 1,4-cyclohexanedicarboxylic acid. Examples of suitable anhydrides include succinic, o-phthalic and trimellitic anhydride. It is noted that various commercially available dimeric fatty acids in saturated (hydrogenated) or unsaturated form may also be used as the dicarboxylic acid. And examples of suitable diols for the preparation of the polyester diols are: ethanediol; di-, tri- or tetraethylene glycol; 1,2-propanediol; di-, tri-, tetrapropylene glycol; 1,3-propanediol; 1,4-butanediol; 1,3-butanediol; 2,3-butanediol; 1,6-hexanediol; 1,5-pentanediol; 2,2-dimethyl-1,3-propanediol (neopentylglycol); 1,4-dihydroxycyclohexane; 1,4-dimethylcyclohexane; 1,8-octanediol; 1,10-decanediol; 1,12-decanediol; 2,2,4- and/or 2,4,4-trimethyl-1,3-pentanediol; and, mixtures thereof.

Other useful polyester diols are those obtainable from diol initiated polymerization of hydroxycarboxylic acids containing from 2 to 12 carbon atoms or a lactone thereof. The hydroxycarboxylic acids may be saturated or unsaturated, linear or branched, of which example include: glycolic acid; lactic acid; 5-hydroxy valeric acid; 6-hydroxy caproic acid; ricinoleic acid; 12-hydroxy stearic acid; 12-hydroxydodecanoic acid; 5-hydroxydodecanoic acid; 5-hydroxydecanoic acid; and. 4-hydroxydecanoic acid. Examples of suitable lactones are β-propiotactone, δ-valerolactone, (C₁-C₆)alkyl-valerolactone, ε-caprolactone and (C₁-C₆)alkyl-ε-caprolactone. Exemplary commercial polyether-polyester polyols having utility in the present invention include Solvermol^{®} 805 and Solvermol^{®} 750 available from BASF.

The above aside, it is preferred that at least one polyol from which the polyurethane is derived is a polyether polyol, in particular a polyether polyol having a polydispersity (PD) of less than 2, preferably less than 1.5, and more preferably less than 1.3. For completeness, a *"polyether"* is understood for purpose of the present invention as a polymer whose repeating unit contains ether functionalities C-O-C in the main chain. Polymers having lateral ether groups, such as cellulose ethers, starch ethers, and vinyl ether polymers, as well as polyacetals, are therefore not covered by this definition. Desirably, the polyether polyol is a polyoxyalkylene glycol and in particular a polyoxy(C₂-C₃)alkylene glycol. For completeness, the term polyoxy(C₂-C₃)alkylene refers to polyether radicals derived from ethyleneoxide, propyleneoxide or both ethyleneoxide and propyleneoxide.

In some embodiments of the present invention, the first component includes at least one fatty polyol. Suitable fatty polyols include, for instance fatty acids, esters of fatty acids, amides of fatty acids and dimers, trimers, oligomers or polymers of fatty acids thereof, provided said compounds possess two or more hydroxyl groups.The hydroxyl functions of a suitable fatty polyol may reside on the fatty acid residue, on other parts of the molecule, or on both.

As exemplary fatty polyols there may be mentioned: castor oil; the products of hydroxylation of unsaturated or polyunsaturated natural oils; the products of hydrogenation of unsaturated or polyunsaturated polyhydroxyl natural oils; polyhydroxyl esters of alkyl hydroxy fatty acids; polymerized natural oils; and, alkylhydroxylated amides of fatty acids. A preference may be noted for the use, either alone or in combination of: castor oil; hydroxylated soybean oil; hydrogenated castor oil; polymerized castor oil; hydroxy ethyl ricinoleate; and, hydroxy ethyl ricinoleamide.

### ii) Optional Further Active Hydrogen Compounds

Certain polyols may function not only as reactants in the synthesis of the polyurethanes but also as solubilizers for the non-polymerizable electrolyte. Broadly, solubilizers have the function of promoting the miscibility of the electrolyte within the adhesive composition formed upon admixture of the two components thereof: solubilizers are, as such, preferably polar compounds and should desirably be liquid at room temperature.

In this category there may be mentioned: polyoxyalkylene glycols; polpolyhydric alcohols; and, sugars. Whilst polyoxyalkylene glycols are mentioned hereinabove, it is noted that such a solubilizing function may be particularly attained through the use of polyoxy(C₂-C₃)alkylene glycols having a weight average molecular weight of from 200 to 10000 g/mol, for example 200 to 2000 g/mol.

Polyhydric alcohols and sugars having utility as solubilizers and which may be used alone or in combination, include, but are not limited to: ethylene glycol, 1,3-propanediol, cyclohexandiol, hydroquinone, catechol, resorcinol, phloroglucinol, pyrogallol, hydroxyhydroquinone, tris(hydroxymethyl)benzene, tris(hydroxymethyl)benzene with three methyl or ethyl substituents bonded to the remaining benzene carbon atoms, isosorbide, isomannide, isoidide, glycerol, cyclohexane-1,2,4-triol, 1,3,5-cyclohexanetriol, pentane-1,2,3-triol, hexane-1,3,5-triol, erythritol, 1,2,4,5-tetrahydroxybenzene, threitol, arabitol, xylitol, ribitol, mannitol, sorbitol, inositol, fructose, glucose, mannose, lactose, 1,1,1-tris(hydroxymethyl)propane, 1,1,1-tris(hydroxymethyl)ethane, trimethylolpropane, di(trimethylolpropane), trimethylolpropane ethoxylate, 2-hydroxymethyl-1,3-propanediol, pentaerythritol allyl ether and pentaerythritol.

It is noted that at least one monol can preferably be employed in synthesizing the polyurethane as a further active hydrogen reactant ii). For example, a mono-functional hydrophilic polyoxyalkylene - such as polyoxyethylene or polyoxpropylene - can be incorporated into the polyurethane as a means of modifying the properties of the latex and improving its ease of emulsion formation. When included, the monol should present in an amount of from 0.1 to 5 wt.%, based on the weight of i) said at least one polyol.

The present invention does not preclude the presence in the first component of a chain extender, particularly as regards that embodiment where the NCO-functional compound(s) of the second component comprise or consist of an NCO-functional pre-polymer. As known to the skilled artisan, typical chain extenders have a weight average molecular weight (Mw) of from 18 to 500 g/mol and have at least two active hydrogen containing groups. Whilst water may therefore be used as a chain extender, it is however preferred that the two component (2K) composition is substantially free of water. The use of polyamines might be suggested however and as exemplary polyamines which may be used alone or in combination there may be mentioned: aminated polypropylene glycols such as Jeffamine D-400, available from Huntsman Chemical Company; hydrazine; piperazine; amino ethyl piperazine; 2-methyl piperazine; 1,5-diamino-3-methyl-pentane; isophorone diamine; ethylene diamine; diamino butane; hexane diamine; hexamethylene diamine; tetramethylene tetraamine; aminoethyl propyl trimethoxy silane; diethylene triamine; triethylene tetramine; triethylene pentamine; ethanolamine; and, lysine.

Where a chain extender is included, the added amount thereof is constrained by the aforementioned molar equivalents ratio of the active hydrogen atoms to the NCO groups in the two component (2K) composition.

### iii) Non-Polymerizable Electrolyte

The composition comprises from 1 to 20 wt.%, based on the weight of the two component (2K) composition, of non-polymerizable electrolyte: the electrolyte may preferably constitute from 1 to 10 wt.%, for example from 2 to 10 wt.% of said composition.

Important electrolytes include the non-polymerizable salts of: ammonium; pyridinium; phosphonium; imidazolium; oxazolium; guadinium; and, thiazolium. More particularly, the electrolyte of the present invention should comprise at least one salt having a Formula selected from the group consisting of: 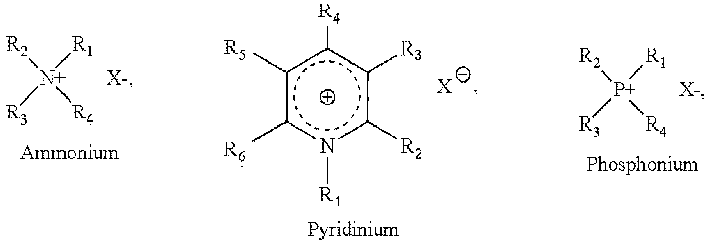 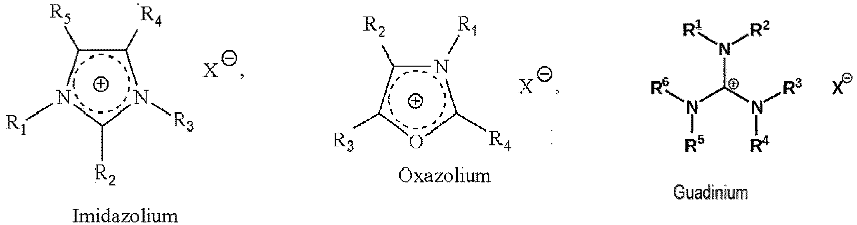 and 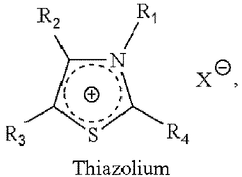 wherein:
R¹, R², R³, R⁴, R⁵ and R⁶ are independently selected from hydrogen, C₁-C₁₈ alkyl, C₃-C₁₈ cycloalkyl, C₆-C₁₈ aryl, C₇-C₂₄ aralkyl, C₂-C₂₀ alkenyl, -C(O)R^{q}, -C(O)OH, -CN and -NO₂; and,
R^{q} is C₁-C₆ alkyl.

Where an ammonium salt is used, it may be subject to the proviso that at most three and desirably at most two of the groups R¹ to R⁴ may be hydrogen.

As regards said moieties R¹ to R⁶, the terms C₁-C₁₈ alkyl, C₃-C₁₈ cycloalkyl, C₆-C₁₈ aryl, C₇-C₂₄ aralkyl, C₂-C₂₀ alkenyl expressly include groups wherein one or more hydrogen atoms are substituted by halogen atoms (e.g. C₁-C₁₈ haloalkyl) or hydroxyl groups (e.g. C₁-C₁₈ hydroxyalkyl). In particular, it is preferred that R¹, R², R³, R⁴, R⁵ and R⁶ are independently selected from hydrogen, C₁-C₁₂ alkyl, C₁-C₁₂ haloalkyl, C₁-C₁₂ hydroxyalkyl and C₃-C₁₂ cycloalkyl. For example, R¹, R², R³, R⁴, R⁵ and R⁶ may be independently selected from hydrogen, C₁-C₆ alkyl, C₁-C₆ haloalkyl and C₁-C₆ hydroxyalkyl.

There is no particular intention to limit the counter anion (X-) which may be employed in the electrolyte. Exemplary anions may be selected from:
- Halides;
- Pseudohalides and halogen-containing compounds of the formulae PF₆⁻, CF₃SO₃⁻, (CF₃SO₃)₂N⁻, CF₃CO₂⁻ and CCl₃CO₂⁻,
- CN⁻, SCN⁻ and OCN⁻;
- Phenates;
- Sulfates, sulfites and sulfonates of the general formulae SO₄²⁻, HSO₄⁻, SO₃²⁻, HSO₃⁻, R^{a}OSO₃⁻ and R^{a}SO₃⁻;
- Phosphates of the general formulae PO₄³⁻, HPO₄²⁻, H₂PO₄⁻, R^{a}PO₄²⁻, HR^{a}PO₄⁻ and R^{a}R^{b}PO₄⁻;
- Phosphonates and phosphinates of the general formulae R^{a}HPO₃⁻, R^{a}R^{b}PO₂⁻ and R^{a}R^{b}PO₃⁻;
- Phosphites of the general formulae: PO₃³⁻, HPO₃²⁻, H₂PO₃⁻, R^{a}PO₃²⁻, R^{a}HPO₃- and R^{a}R^{b}PO₃⁻;
- Phosphonites and phosphinites of the general formulae R^{a}R^{b}PO₂⁻, R^{a}HPO₂⁻, R^{a}R^{b}PO⁻ and R^{a}HPO⁻;
- Carboxylic acid anions of the general formula R^{a}COO⁻;
- Hydroxycarboxylic acids anions and sugar acid anions;
- Saccharinates (salts of o-benzoic acid sulfimide);
- Borates of the general formulae BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)⁻ and B(R^{a}SO₄)⁻;
- Boronates of the general formulae R^{a}BO₂²⁻ and R^{a}R^{b}BO-;
- Carbonates and carbonic acid esters of the general formulae HCO₃⁻, CO₃²⁻ and R^{a}CO₃⁻;
- Silicates and silicic acid esters of the general formulae SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻ and HR^{a}R^{b}SiO₄⁻;
- Alkyl- and arylsilanolates of the general formulae R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻ and R^{a}R^{b}SiO₃²⁻;
- Pyridinates and pyrimidinates;
- Carboxylic acid imides, bis(sulfonyl)imides and sulfonylimides of the general formulae: 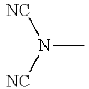 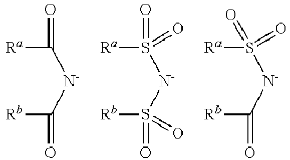
- Methides of the general formula: 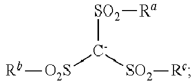
- Alkoxides and aryloxides of the general formula R^{a}O⁻; and,
- Sulfides, hydrogen sulfides, polysulfides, hydrogen polysulfides and thiolates of the general formulae S²⁻, HS⁻, [Sᵥ]²⁻, [HSᵥ]⁻ and [R^{a}S]⁻
in which general formulae
v is a whole positive number of from 2 to 10.
R^{a}, R^{b}, R^{c} and R^{d} are independently selected from hydrogen, a C₁-C₁₂ alkyl, C₅-C₁₂ cycloalkyl, C₅-C₁₂ heterocycloalkyl, C₆-C₁₈ aryl and C₅-C₁₈ heteroaryl.

Based on the definitions in the above list, preferred anions are selected from the group consisting of: halides; pseudohalides and halogen-containing compounds as defined above; carboxylic acid anions, in particular formate, acetate, propionate, butyrate and octanoate; hydroxycarboxylic acid anions, such as lactate; pyridinates and pyrimidinates; carboxylic acid imides, bis(sulfonyl)imides and sulfonylimides; sulfates, in particular methyl sulfate and ethyl sulfate; sulfites; sulfonates, in particular methanesulfonate; and, phosphates, in particular dimethyl-phosphate, diethyl-phosphate and di-(2-ethylhexyl)-phosphate.

The electrolyte of the first part is preferably selected from the group consisting of 1-ethyl-3-methyl-1H-imidazol-3-um methanesulfonate, 1-ethyl-3-methyl-1H-imidazol-3-um methyl sulfate, 1-hexyl-3-methylimidazolium 2-(2-fluoroanilino)-pyridinate, 1-hexyl-3-methylimidazolium imide, 1-butyl-1-methyl- pyrrolidinium 2-(2-fluoroanilino)-pyridinate, 1-butyl-1- methyl-pyrrolidinium imide, trihexyl (tetradecyl) phospholium 2-(2-fluoroanilino)-pyridinate, cyclohexyltrimethylammonium bis (trifluormethylsulfonyl) imide, di(2-hydroxyethyl) ammonium trifluoroacetate, N,N-dimethyl (2-hydroxyethyl) ammonium octanoate, methyltrioctylammonium bis (trifluoromethylsulfonyl) imide, N-ethyl-N-N-N-N-tetramethylguanidinium trifluoromethanesulfonate, guanidinium trifluoromethanesulfonate, 1-butyl-4-methylpyridinium bromide, 1-butyl-3-methylpyridinium tetrafluoroborate, 1-butyl-3-hydroxymethylpyridinium ethylsulfate, 1-butyl-1-methylpyrrolidinium bis (trifluoromethylsulfonyl) imide, 1-butyl-methylpyrrolidinium tris (pentafluoroethyl) trifluorophosphate, 3-methyl imidazolium ethylsulfate, 1-ethyl-3-methylimidazolium chloride, 1-ethyl-3-ethyl-methylimidazolium bromide, 1-butyl-3-methylimidazolium chloride, 1-hexyl-3-methylimidazolium chloride, 1-octyl-3-methylimidazolium chloride, 1-methyl-3-octylimidazolium chloride, 1-propyl-3-methylimidazolium iodide, 1-butyl-3-methylimidazolium tetrafluoroborate, 1-butyl-3-methylimidazolium trifluoromethanesulfonate, 1-butyl-3-methylimidazolium hexafluorophosphate, 1-ethyl-3-methylimidazolium trifluoromethanesulfonate, 1-butyl-2,3-dimethylimidazolium tetrafluoroborate, 1-butyl-2,3-dimethylimidazolium hexafluorophosphate, 1-butylimidazol, 1-methylimidazolium tetrafluoroborate, tetrabutylphosphonium tris (pentafluoroethyl) trifluorophosphate, trihexyl (tetradecyl) phosphonium tetrafluoroborate and mixtures thereof. A particular preference for the use of at least one of 1-ethyl-3-methyl-1H-imidazol-3-um methanesulfonate, 1-ethyl-3-methylimidazolium trifluoromethanesulfonate and 1-ethyl-3-methyl-1H-imidazol-3-um methyl sulfate may be mentioned.

### 2. SECOND COMPONENT OF THE TWO-COMPONENT (2K) COMPOSITION

### iv) Polyisocyanate

The second component of the composition comprises at least one polyisocyanate. As used herein *"polyisocyanate"* means a compound comprising at least two -N=C=O functional groups, for example from 2 to 5 or from 2 to 4 -N=C=O functional groups. Suitable polyisocyanates include aliphatic, cycloaliphatic, aromatic and heterocyclic isocyanates, dimers and trimers thereof, and mixtures thereof.

Aliphatic and cycloaliphatic polyisocyanates can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1,6-hexamethylene diisocyanate (HDI), octamethylene diisocyanate, nonamethylene diisocyanate, decamethylene diisocyanate, 1,6,11-undecanetriisocyanate, 1,3,6-hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4'-diisocyanate (H₁₂MDI), 1-isocyanatomethyl-3-isocyanato-1,5,5-trimethyl-cyclohexane (isophorone diisocyanate, IPDI), cyclohexane 1,4-diisocyanate, hydrogenated xylylene diisocyanate (H₆XDI), 1-methyl-2,4-diisocyanato-cyclohexane, m- or p-tetramethylxylene diisocyanate (m-TMXDI, p-TMXDI) and dimer fatty acid diisocyanate.

The term *"aromatic polyisocyanate"* is used herein to describe organic isocyanates in which the isocyanate groups are directly attached to the ring(s) of a mono- or polynuclear aromatic hydrocarbon group. In turn, the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene and chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates include, but are not limited to: all isomers of toluene diisocyanate (TDI), either in the isomerically pure form or as a mixture of several isomers; naphthalene 1,5-diisocyanate; diphenylmethane 4,4'-diisocyanate (MDI); diphenylmethane 2,4'-diisocyanate and mixtures of diphenylmethane 4,4'-diisocyanate with the 2,4' isomer or mixtures thereof with oligomers of higher functionality (so-called crude MDI); xylylene diisocyanate (XDI); diphenyl-dimethylmethane 4,4'-diisocyanate; di- and tetraalkyl-diphenylmethane diisocyanates; dibenzyl 4,4'-diisocyanate; phenylene 1,3-diisocyanate; and, phenylene 1,4-diisocyanate.

The polyisocyanates, where required, may have been biuretized and / or isocyanurated by generally known methods, such as described in UK Patent No. 889,050.

The term *"polyisocyanate"* is here also intended to encompass pre-polymers formed by the partial reaction of the aforementioned aliphatic, cycloaliphatic, aromatic and heterocyclic isocyanates with polyols to give isocyanate functional oligomers, which oligomers may be used alone or in combination with free isocyanate(s). When employed, the NCO-functional pre-polymers should preferably be characterized by at least one of: a) an NCO content of from 5 to 30%, preferably from 10 to 25 wt.% based on the weight of the pre-polymer; b) an NCO functionality of from 2.2 to 3.0, preferably from 2.2 or 2.4 to 2.9; c) a viscosity at 20°C of from 300 to 35,000 mPa.s, preferably from 1,000 to 10,000 mPa.s; and, d) a number average molecular weight (Mn) of from 500 to 30,000, for example from 500 to 15,000 or from 500 to 10,000 g/mol. For completeness, these characterizations a) to d) are not intended to be mutually exclusive: indeed, the pre-polymer may meet one, two, three or four of these stated characterizations.

Commercial examples of suitable polyisocanates include, without intention to limit the present invention: Desmodur product series, such as Desmodur E 744, available from Covestro Deutschland; Hysol HF6005 isocyanate, available from Henkel Corporation; Isonate M product series, available from The Dow Chemical Company; Lupranat product series, available from BASF; and, Suprasec product series, available from Huntsman.

### Additives and Adjunct Ingredients

Said compositions obtained in the present invention will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are: catalysts; solubilizers; tougheners; electrically conductive particles; electrically non-conductive fillers; plasticizers; stabilizers including UV stabilizers; antioxidants; reactive diluents; dessicants or moisture scavengers; adhesion promoters; fungicides; flame retardants; rheological adjuvants; color pigments or color pastes; solvents; and, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 40 wt.% of the total composition and preferably should not comprise more than 30 wt.% of the composition.

For completeness, it is noted that, in general, adjunct materials and additives which contain reactive groups will be blended into the appropriate part of the two (2K) component composition to ensure the storage stability thereof. Unreactive materials may be formulated into either or both of the two components.

The composition - and conventionally the first component thereof - may comprise standard catalysts for the reaction between polyisocyanates and active hydrogen compounds, as known in the art. Such catalysts include but are not limited to: stannous salts of carboxylic acids, such as stannous octoate, stannous oleate, stannous acetate and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; organosilicon titanium compounds; bismuth tris-2-ethylhexanoate, bismuth neodecanoate complexes and complexes of bismuth with hydroxypropyl ethylene diamine and hydroxylethyl ethylene diamine, available as Bicat^{®} catalysts from Everchem Specialty Chemicals; acid compounds such as phosphoric acid and p-toluenesulfonic acid; triphenylborane; triphenylphosphine; 1,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine. Depending on the nature of the isocyanate, the amount of catalyst employed is typically in the range from 0.005 to 5 wt.%, for example from 0.1 to 1 wt.% of the two component (2K) composition.

As noted above, the solubilizer has the function of promoting the miscibility of the electrolyte within the adhesive composition formed upon admixture of the two components thereof: the solubilizer may or may not form part of the polymer matrix formed upon curing of the adhesive composition but does serve to facilitate ion transfer therein. The solubilizer is, as such, preferably a polar compound and should desirably be liquid at room temperature.

In addition to the polyol solubilizers mentioned above, suitable classes of solubilizer which do not possess hydroxyl functionality include: polyphosphazenes; polymethylenesulfides; polyethylene imines; silicone surfactants and fluorinated silicone surfactants, such as fluorinated polysilanes, polyalkylsiloxane and polyoxyalkylene modified polydimethylsiloxanes; and, co-polymers of functionalized polyalkysiloxanes and epoxy resins, such as copolymers of polydimethylsiloxane (PDMS) and epoxy resin. Such solubilizers not possessing hydroxyl functionality may typically be included in the two component (2K) composition in an amount of from 0 to 5 wt.%, based on the weight of the composition.

The presence of tougheners in the present composition can, in certain circumstances, be advantageous to the debonding of the cured adhesive. Without intention to be bound by theory, tougheners can facilitate phase separation within the cured adhesive under the application of electrical potential. In an exemplary embodiment, the adhesive of the present invention might thus comprise from 0.1 to 10 wt.%, based on the weight of the composition, of a polybutadiene based toughener. Exemplary commercial polybutadiene based tougheners include Poly bd^{®} R20 LM and Poly bd^{®} 15 HT available from Cray Valley.

The composition of the present invention may comprise electrically conductive particles. The composition may, for instance, contain from 0 to 10 wt.% or from 0 to 5 wt.% of electrically conductive particles, based on the weight of the composition.

Broadly, there is no particular intention to limit the shape of the particles employed as conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as conductive fillers. However, such conductive fillers will conventionally have an average volume particle size, as measured by laser diffraction / scattering methods, of from 0.1 to 1500 µm, for example from 1 to 1250 µm.

Exemplary conductive particulate fillers include, but are not limited to: silver; copper; gold; palladium; platinum; nickel; gold or silver-coated nickel; carbon black; carbon fiber; graphite; aluminum; indium tin oxide; silver coated copper; silver coated aluminum; metallic coated glass spheres; metallic coated filler; metallic coated polymers; silver coated fiber; silver coated spheres; antimony doped tin oxide; conductive nanospheres; nano silver; nano aluminum; nano copper; nano nickel; carbon nanotubes; and, mixtures thereof. The use of particulate silver and / or carbon black as the conductive filler is preferred.

The composition of the present invention may optionally comprise electrically non-conductive particulate filler. The composition may, for instance, contain from 0 to 10 wt.%, for example from 0.5 to 10 wt.% or from 0.5 to 5 wt.% of electrically non-conductive particulate filler, based on the weight of the composition.

Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as non-conductive fillers. However, such non-conductive fillers will conventionally have an average volume particle size, as measured by laser diffraction / scattering methods, of from 0.1 to 1500 µm, for example from 1 to 1250 µm.

Exemplary non-conductive fillers include but are not limited to calcium carbonate, calcium oxide, calcium hydroxide (lime powder), precipitated and/or pyrogenic silicic acid, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added.

The pyrogenic and/or precipitated silicic acids advantageously have a BET surface area from 10 to 90 m²/g. When they are used, they do not cause any additional increase in the viscosity of the composition according to the present invention, but do contribute to strengthening the cured composition.

It is likewise conceivable to use pyrogenic and/or precipitated silicic acids having a higher BET surface area, advantageously from 100 to 250 m²/g as a filler: because of the greater BET surface area, the effect of strengthening the cured composition is achieved with a smaller proportion by weight of silicic acid.

Also suitable as non-conductive fillers are hollow spheres having a mineral shell or a plastic shell. These can be, for example, hollow glass spheres that are obtainable commercially under the trade names Glass Bubbles@. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Non-conductive fillers which impart thixotropy to the composition may be preferred for many applications: such fillers are also described as rheological adjuvants, e.g. hydrogenated castor oil, fatty acid amides, or swellable plastics such as PVC.

The desired viscosity of the curable composition formed may be determinative of the amount of filler used. Having regard to that latter consideration, the total amount of fillers - both electrically conductive and non-conductive - present in the compositions should not prevent the composition from being readily applicable by the elected method of application to the composition to a substrate. For example, curable compositions which are intended to be extrudable from a suitable dispensing apparatus, such as a tube, should possess a viscosity of from 1000 to 150,000, preferably from 10,000 to 100,000 mPas.

The addition of certain additives may promote the adhesion of the coating compositions to particular substrates. In this regard, the composition of the present invention may comprise from 0 to 5 wt.%, for example from 0.5 to 5 wt.% based on the weight of the composition, of: (v) at least one additive selected from the group consisting of: morin(2-(2,4-dihydroxy phenyl)-3,5,7-trihydroxy-4H-1-cumarone-4-ketone); 3,7-dihydroxy-2-naphthoic acid (3,7-dihydroxy naphthlene-2-carboxylic acid); pyrogallol carboxylic acid (2,3,4-trihydroxybenzoic acid); 3,4-dihydroxy-benzene guanidine-acetic acid; gallic acid (3,4,5-trihydroxybenzoic acid); para-aminosalicylic acid (4-amino-2-hydroxybenzoic acid, PAS); flutter acid (4,4'-methylene-bis(3-hydroxy-2-naphthoic acid)); and, citric acid (2-hydroxypropane-1,2,3-tricarboxylic acid). Of these compounds a preference for the use - alone or in combination - of citric acid, gallic acid and, in particular, para-aminosalicylic acid (PAS) may be mentioned.

A *"plasticizer"* for the purposes of this invention is a substance that decreases the viscosity of the composition and thus facilitates its processability. Herein the plasticizer may constitute up to 10 wt.% or up to 5 wt.%, based on the total weight of the composition, and is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

*"Stabilizers"* for purposes of this invention are to be understood as antioxidants, thermal stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

In order to enhance shelf life even further, it is often advisable to further stabilize the compositions of the present invention with respect to moisture penetration through using dessicants. Examples of suitable desiccants or moisture scavengers include, but are not limited to: silica gel; anhydrous calcium sulfate (anhydrite); calcium sulfate dihydrate (gypsum); calcium oxide; montmorillonite clay; molecular sieves such as those including natural or synthetic zeolite; and, activated alumina.

A need also occasionally exists to lower the viscosity of an adhesive composition according to the present invention for specific applications, by using reactive diluent(s). The total amount of reactive diluents present will typically be from 0 to 10 wt.%, for example from 0 to 5 wt.%, based on the total weight of the composition.

The presence of solvents and non-reactive diluents in the compositions of the present invention is also not precluded where this can usefully moderate the viscosities thereof. For instance, but for illustration only, the compositions may contain one or more of: alkyl acetate solvents such as ethyl acetate, n-propyl acetate, butyl acetate, n-butyl acetate, propylene glycol monomethyl ether acetate and methoxypropyl acetate (MPA); alkyl propionate solvents such as n-butyl propionate and n-pentyl propionate; dibasic esters such as dimethyl succinate, dimethyl glutarate, dimethyl adipate; (di)alkyl carbonate solvents such as ethylene carbonate, propylene carbonate (PC), dimethyl carbonate (DMC), ethyl methyl carbonate (EMC) and diethyl carbonate (DEC); ethers such as tetrahydrofuran, dioxane and dimethoxyethane; glycol ether solvents such as ethylene glycol dimethyl ether, ethylene glycol diethyl ether, ethylene glycol dibutyl ether, ethylene glycol diphenyl ether, diethylene glycol, diethylene glycol-monomethyl ether, diethylene glycol-monoethyl ether, diethylene glycol-mono-n-butyl ether, diethylene glycol dimethyl ether, diethylene glycol diethyl ether, diethylene glycoldi-n-butylyl ether, propylene glycol butyl ether, propylene glycol phenyl ether, dipropylene glycol, dipropylene glycol monomethyl ether, dipropylene glycol dimethyl ether and dipropylene glycoldi-n-butyl ether; amide solvents dimethyl acetamide and N-methylpyrrolidone; ketone solvents such as acetone, diisobutyl ketone, isobutyl heptyl ketone, isophorone, methyl ethyl ketone, methyl n-amyl ketone and methyl isobutyl ketone; toluene; xylene; diphenylmethane; diisopropylnaphthalene; petroleum fractions such as Solvesso^{®} products (available from Exxon); and, chlorohydrocarbon solvents such as 4-chlorotrifluoromethylbenzene and 3,4-bis(dichloro)trifluoromethylbenzene.

The above aside, it is preferred that solvents and non-reactive diluents constitute *in toto* less than 15 wt.%, in particular less than 10 wt.%, based on the total weight of the composition.

### METHODS AND APPLICATIONS

To form the defined two component (2K) curable compositions, the reactive components are brought together and mixed in such a manner as to induce the hardening thereof. The reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale applications in which volumes of less than 2 liters will generally be used, the preferred packaging for the two components (2K) compositions will be side-by-side double cartridges or coaxial cartridges, in which two tubular chambers - typically of equal volume - are arranged alongside one another or inside one another and are sealed with pistons: the driving of these pistons allows the parts to be extruded from the cartridge, advantageously through a closely mounted static or dynamic mixer. For larger volume applications, the two components of the composition may advantageously be stored in drums or pails: in this case the two components are extruded via hydraulic presses, in particular by way of follower plates, and are supplied via pipelines to a mixing apparatus which can ensure fine and highly homogeneous mixing of the two components. In any event, for any package, it is important that the components be disposed with an airtight and moisture-tight seal, so that both components can be stored for a long time, ideally for 12 months or longer.

Non-limiting examples of two part dispensing apparatuses and methods that may be suitable for the present invention include those described in U.S. Patent No. 6,129,244 and US Patent No. 8,313,006.

The first and second components of the composition will conventionally be mixed in amounts by weight which achieve the desired ratio of NCO groups to active hydrogen atoms. By way of example, the ratio by weight of said first part to said second part may be in the range from 4:1 to 1:4, preferably from 2:1 to 1:2, for example 1:1.

Where applicable, the two component (2K) curable compositions should broadly be formulated to exhibit an initial viscosity - determined immediately after mixing, for example, up to two minutes after mixing - of less than 200000 mPa·s, for instance less than 100000 mPa.s, at 25°C. Independently of or additional to said viscosity characteristics, the two component (2K) composition should be formulated to be bubble (foam) free upon mixing and subsequent curing.

In accordance with the broadest process aspects of the present invention, the above described compositions are applied to the material layer(s) and then cured *in situ.* Prior to applying the compositions, it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as acetone, carbon tetrachloride ortrichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In some embodiments, the adhesion of the coating compositions of the present invention to the preferably pre-treated substrate may be facilitated by the application of a primer thereto. Indeed primer compositions may be necessary to ensure efficacious fixture and / or cure times of the adhesive compositions on inactive substrates. Whilst the skilled artisan will be able to select an appropriate primer, instructive references for the choice of primer include but are not limited to: US Patent No. 3,855,040; US Patent No. 4,731,146; US Patent No. 4,990,281; US Patent No. 5,811,473; GB 2502554; and, US Patent No. 6,852,193.

The compositions are then applied to the preferably pre-treated, optionally primed surfaces of the substrate by conventional application methods such as: brushing; roll coating; doctor-blade application; printing methods; and, spraying methods, including but not limited to air-atomized spray, air-assisted spray, airless spray and high-volume low-pressure spray.

As noted above, the present invention provides a bonded structure comprising: a first material layer having an electrically conductive surface; and, a second material layer having an electrically conductive surface, wherein the cured electrochemically debondable two-part (2K) adhesive composition as defined hereinabove and in the appended claims is disposed between said first and second material layers. To produce such a structure, the adhesive composition may be applied to at least one internal surface of the first and / or second material layer and the two layers then subsequently contacted, optionally under the application of pressure, such that the electrically debondable adhesive composition is interposed between the two layers.

It is recommended that the compositions be applied to a surface at a wet film thickness of from 10 to 500 µm.The application of thinner layers within this range is more economical and provides for a reduced likelihood of deleterious thick cured regions. However, great control must be exercised in applying thinner coatings or layers so as to avoid the formation of discontinuous cured films.

The curing of the applied compositions of the invention typically occurs at temperatures in the range of from 20°C to 80°C. The temperature that is suitable depends on the specific compounds present and the desired curing rate and can be determined in the individual case by the skilled artisan, using simple preliminary tests if necessary. Of course, curing at lower temperatures within the aforementioned ranges is advantageous as it obviates the requirement to substantially heat or cool the mixture from the usually prevailing ambient temperature. Where applicable, however, the temperature of the mixture formed from the respective parts of a two (2K) part composition may be raised above the mixing temperature and / or the application temperature using conventional means including microwave induction.

The present invention will be described with reference to the appended drawings in which:
Fig. 1a depicts a bonded structure in accordance with a first embodiment of the present invention.
Fig. 1b depicts a bonded structure in accordance with a second embodiment of the present invention.
Fig. 2a depicts the initial debonding of the structure of the first embodiment upon passage of a current across that structure.
Fig. 2b depicts the initial debonding of the structure of the second embodiment upon passage of a current across that structure.

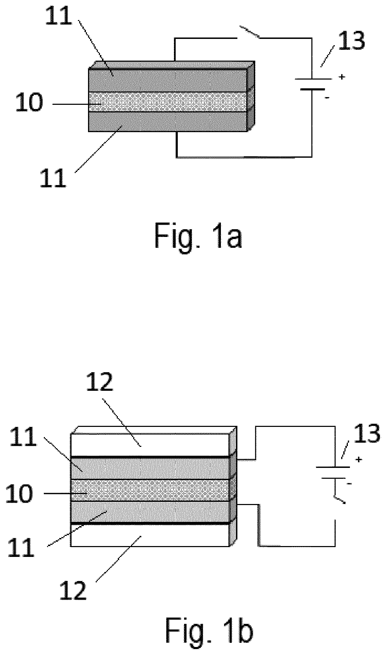

As shown in Figures 1a appended hereto, a bonded structure is provided in which a layer of cured adhesive (10) is disposed between two conductive substrates (11). A layer of non-conductive material (12) may be disposed on the conductive substrates (11) to form the more complex bonded structure as depicted in Fig. 1b. Each layer of conductive substrate (11) is in electrical contact with an electrical power source (13) which may be a battery or an AC-driven source of direct current (DC).

The positive and negative terminals of that power source (13) are shown in one fixed position but the skilled artisan will of course recognize that the polarity of the system can be reversed.

The two conductive substrates (11) are shown in the form of a layer which may be constituted by *inter alia:* a metallic film; a metallic mesh or grid; deposited metal particles; a resinous material which is rendered conductive by virtue of conductive elements disposed therein; or, a conducting oxide layer. As exemplary conductive elements there may be mentioned silver filaments, single-walled carbon nanotubes and multi-walled carbon nanotubes. As exemplary conducting oxides there may be mentioned: doped indium oxides, such as indium tin oxide (ITO); doped zinc oxide; antimony tin oxide; cadmium stannate; and, zinc stannate. The selection of the conductive material aside, the skilled artisan will recognize that the efficacy of the debonding operation may be diminished where the conductive substrates (11) are in the form of a grid or mesh which offers limited contact with the layer of cured adhesive (10).

When an electrical voltage is applied between each conductive substrate (11), current is supplied to the adhesive composition (10) disposed there between. This induces electrochemical reactions at the interface of the substrates (11) and the adhesive composition, which electrochemical reactions are understood as oxidative at the positively charged or anodic interface and reductive at the negatively charged or cathodic interface. The reactions are considered to weaken the adhesive bond between the substrates allowing the easy removal of the debondable composition from the substrate.

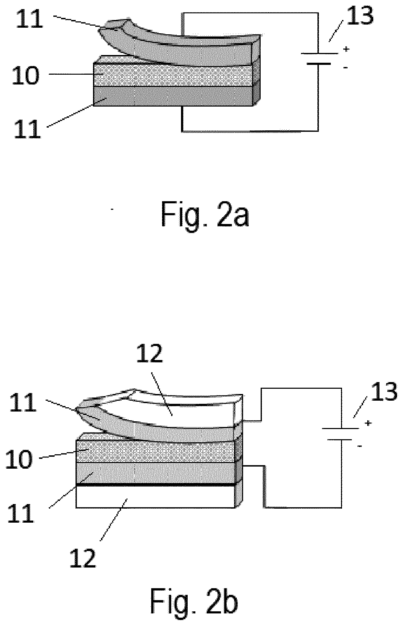

As depicted in Figures 2a and 2b, the debonding occurs at the positive interface, that interface between the adhesive composition (10) and the electrically conductive surface (11) that is in electrical contact with the positive electrode. By reversing current direction prior to separation of the substrates, the adhesive bond may be weakened at both substrate interfaces.

It is however noted that the composition of the adhesive layer (10) may be moderated so that debonding occurs at either the positive or negative interface or simultaneously from both. For some embodiments, a voltage applied across both surfaces so as to form an anodic interface and a cathodic interface will cause debonding to occur simultaneously at both the anodic and cathodic adhesive / substrate interfaces. In an alternative embodiment, reversed polarity may be used to simultaneously disbond both substrate / adhesive interfaces if the composition does not respond at both interfaces to direct current. The current can be applied with any suitable waveform, provided that sufficient total time at each polarity is allowed for debonding to occur. Sinusoidal, rectangular and triangular waveforms might be appropriate in this regard and may be applied from a controlled voltage or a controlled current source.

Without intention to limit the present invention, it is considered that the debonding operation may be performed effectively where at least one and preferably both of the following conditions are instigated: a) an applied voltage of from 0.5 to 200 V, for example from 10 to 100 V; and, b) the voltage being applied for a duration of from 1 second to 120 minutes, for example from 1 second to 60 minutes. Where the release of the conductive substrate from the cured adhesive is to be facilitated by the application of a force - exerted via a weight or a spring, for instance - the potential might only need to be applied for the order of seconds.

The following examples are illustrative of the present invention and are not intended to limit the scope of the invention in any way.

### EXAMPLE

The following materials were employed in the Example:

| | |
|---|---|
| Rizinusol Q1: | Partially dehydrated castor oil, available from BASF. |
| Voranol CP 1050: | A glycerine initiated propoxylated polyether homopolymer triol, available from Dow Chemical. |
| PES 216: | Liquid polyester polyol - based on adipic acid, neopentyl glycol, 1,6-hexane diol and polypropylene glycol - available from Henkel Germany. |
| Isonate M 143 | Diphenylmethane diisocyanate, available from Dow Chemical. |
| Basionics BC 01: | 1-Ethyl-3-methylimidazolium trifluormethansulfonate, available from BASF. |
| TIB-Kat 216 | Dioctyltin dilaurate (in butylacetate, 5% concentration by weight) available from TIB Chemicals. |
| Sylosiv 3A | Micronized zeolite molecular sieve powder, available from W.R. Grace. |
| Desmophen 4011T: | Trifunctional polyether polyol available from Covestro. |
| Aerosil R202: | Fumed silica treated with polydimethylsiloxane, available from Evonik Industries. |
| 4-aminosalicylic acid: | Available from Alfa Aesar |
| Propylene Carbonate: | Available from Alfa Aesar |
| Glass Microbeads: | Particle diameter less than 100 micron, available from Sigma Aldrich. |

The formulation of this Example is described in Table 1 herein below:

**Table 1**

| **Component** | **Ingredient** | **Amount (g)** | **Amount (wt.%, based on weight of the composition)** |
|---|---|---|---|
| 1^{st} Component | Rizinusol | 1.52 | 16.9 |
| | Voranol CP 1050 | 0.76 | 8.5 |
| | PES 216 | 0.76 | 8.5 |
| | Basionics BC 01 | 0.45 | 5.0 |
| | 4-aminosalicylic acid | 0.18 | 2.0 |
| | Desmophen 4011T | 0.81 | 9.0 |
| | Propylene Carbonate | 0.45 | 5.0 |
| | Aerosil R202 | 0.25 | 2.8 |
| | Sylosiv 3A | 0.35 | 3.9 |
| | TIB-Kat 216 | 0.028 | 0.3 |
| | Glass microbeads | 0.27 | 3.0 |
| 2^{nd} Component | Isonate M 143 | 2.97 | 33.0 |
| | Aerosil R202 | 0.19 | 2.1 |

In preparing the first component, all constituent polyol compounds, 4-aminosalicylic acid, Basionic BC 01, propylene carbonate, Desmophen 4011T and the fumed silica were weighed into a beaker under stirring with a bar to dissolve the soluble ingredients. The zeolite powder, glass microbeads and catalyst were then added and the mixture was homogenized in a speed mixer (1200 rpm, 1 minute).

In preparing the second component, the isocyanate and the fumed silica were separately mixed in a speed mixer (1200 rpm; 1 minute). The first and second components were then admixed under agitation in a speed mixer (1200 rpm; 1 minute).

The test substrate was stainless steel (1.4301), the surface of which had been cleaned with an acetone wipe. The substrate was provided at a thickness of 0.1 inch and cut into six 2.5 cm x 10 cm (1" x4") samples for tensile testing. Tensile lap shear (TLS) test was performed at room temperature based upon ASTM D3163-01 *Standard Test Method for Determining Strength of Adhesively Bonded Rigid Plastic Lap-Shear Joints in Shear by Tension Loading.* The bond overlapping area for each stated substrate was 2.50 cm x 1.25 cm (1" x 0.5") with a bond thickness of 0.1 cm (40 mil).

The applied two-component (2K) adhesive compositions were cured in the overlapping region by the application of a temperature of 80°C for 120 minutes. The bonded structures were then stored at 30°C, 55% relative humidity for overnight prior to initial tensile testing.

For each bonded substrate, tensile lap shear strength was investigated after said 24 hour storage period both prior and subsequent to the application of a constant potential of 70V across the adhesive layer for a duration of 20 minutes. The averaged results are documented in Table 2 herein below.

**Table 2**

| **Substrate** | **Initial Bond Strength (MPa)** | **Bond Strength after 70 V, 20 minutes (MPa)** |
|---|---|---|
| Stainless Steel | 8.48 | 1.56 |

In view of the foregoing description and example, it will be apparent to those skilled in the art that equivalent modifications thereof can be made without departing from the scope of the claims.

## Claims

1. A curable and electrochemically debondable two-component (2K) adhesive composition comprising:
a first component comprising:
i) at least one polyol selected from the group consisting of fatty alcohols, polyester polyols, polyether polyols, polyether-polyester polyols and polycarbonate polyols;
ii) optionally further active hydrogen compounds; and,
iii) non-polymerizable electrolyte; and,
a second component comprising at least one polyisocyanate,
wherein said composition is **characterized in that** the molar equivalents ratio of NCO groups to active hydrogen atoms is at least 1:1.

2. The curable and electrochemically debondable two-component (2K) adhesive composition according to claim 1, said composition comprising, based on the weight of the composition:
a first component comprising:
from 20 to 80 wt.%, preferably from 20 to 60 wt.% of i) at least one polyol selected from the group consisting of fatty alcohols, polyester polyols, polyether polyols, polyether-polyester polyols and polycarbonate polyols;
ii) optionally further active hydrogen compounds; and,
from 1 to 20 wt.%, preferably from 1 to 10 wt.% of iii) non-polymerizable electrolyte; and,
a second component comprising at least one polyisocyanate,
wherein said composition is **characterized in that** the molar equivalents ratio of NCO groups to active hydrogen atoms is from 1:1 to 1.2:1.

3. The curable and electrochemically debondable two-component (2K) adhesive composition according to claim 1 or claim 2, wherein the or each polyol of part i) is **characterized by** a number average molecular weight (Mn) of from 200 to 50,000 g/mol, preferably from 200 to 8000 g/mol.

4. The curable and electrochemically debondable two-component (2K) adhesive composition according to any one of claims 1 to 3, wherein the or each polyol of part i) is **characterized by** a hydroxyl number of from 2 to 850 mg KOH/g, preferably from 25 to 500 mg KOH/g.

5. The curable and electrochemically debondable two-component (2K) adhesive composition according to any one of claims 1 to 4, wherein said part i) comprises at least one fatty polyol.

6. The curable and electrochemically debondable two-component (2K) adhesive composition according to any one of claims 1 to 5, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts.

7. The curable and electrochemically debondable two-component (2K) adhesive composition according to claim 6 wherein said electrolyte is selected from the group consisting of 1-ethyl-3-methyl-1H-imidazol-3-um methansulfonate, 1-ethyl-3-methyl-1H-imidazol-3-um methyl sulfate, 1-hexyl-3-methylimidazolium 2-(2-fluoroanilino)-pyridinate, 1-hexyl-3-methylimidazolium imide, 1-butyl-1-methyl- pyrrolidinium 2-(2-fluoroanilino)-pyridinate, 1-butyl-1- methyl-pyrrolidinium imide, trihexyl (tetradecyl) phospholium 2-(2-fluoroanilino)-pyridinate, cyclohexyltrimethylammonium bis (trifluormethylsulfonyl) imide, di(2-hydroxyethyl) ammonium trifluoroacetate, N,N-dimethyl (2-hydroxyethyl) ammonium octanoate, methyltrioctylammonium bis (trifluoromethylsulfonyl) imide, N-ethyl-N-N-N-N-tetramethylguanidinium trifluoromethanesulfonate, guanidinium trifluoromethanesulfonate, 1-butyl-4-methylpyridinium bromide, 1-butyl-3-methylpyridinium tetrafluoroborate, 1-butyl-3-hydroxymethylpyridinium ethylsulfate, 1-butyl-1-methylpyrrolidinium bis (trifluoromethylsulfonyl) imide, 1-butyl-methylpyrrolidinium tris (pentafluoroethyl) trifluorophosphate, 3-methyl imidazolium ethylsulfate, 1-ethyl-3-methylimidazolium chloride, 1-ethyl-3-ethyl-methylimidazolium bromide, 1-butyl-3-methylimidazolium chloride, 1-hexyl-3-methylimidazolium chloride, 1-octyl-3-methylimidazolium chloride, 1-methyl-3-octylimidazolium chloride, 1-propyl-3-methylimidazolium iodide, 1-butyl-3-methylimidazolium tetrafluoroborate, 1-ethyl-3-methylimidazolium trifluoromethanesulfonate, 1-butyl-3-methylimidazolium trifluoromethanesulfonate, 1-butyl-3-methylimidazolium hexafluorophosphate, 1-butyl-2,3-dimethylimidazolium tetrafluoroborate, 1-butyl-2,3-dimethylimidazolium hexafluorophosphate, 1-butylimidazol, 1-methylimidazolium tetrafluoroborate, tetrabutylphosphonium tris (pentafluoroethyl) trifluorophosphate, trihexyl (tetradecyl) phosphonium tetrafluoroborate and mixtures thereof.

8. The curable and electrochemically debondable two-component (2K) adhesive composition according to claim 6 wherein said electrolyte is selected from the group consisting of 1-ethyl-3-methyl-1H-imidazol-3-um methansulfonate, 1-ethyl-3-methylimidazolium trifluoromethanesulfonate, 1-ethyl-3-methyl-1H-imidazol-3-um methyl sulphate and mixtures thereof.

9. The curable and electrochemically debondable two-component (2K) adhesive composition according to any one of claims 1 to 8 comprising from 0.5 to 5 wt.%, based on the weight of the composition, of (v) at least one additive selected from the group consisting of: morin(2-(2,4-dihydroxy phenyl)-3,5,7-trihydroxy-4H-1-cumarone-4-ketone); 3,7-dihydroxy-2-naphthoic acid; pyrogallol carboxylic acid; 3,4-dihydroxy-benzene guanidine-acetic acid; gallic acid; para-aminosalicylic acid; 4,4'-methylene-bis(3-hydroxy-2-naphthoic acid; and, citric acid.

10. The curable and electrochemically debondable two-component (2K) adhesive composition according to any one of claims 1 to 8 comprising from 0.5 to 5 wt.%, based on the weight of the composition, of para-aminosalicylic acid (PAS).

11. The curable and electrochemically debondable two-component (2K) adhesive composition according to any one of claims 1 to 10 comprising from 0.005 to 5 wt.%, preferably from 0.1 to 1 wt.%, based on the weight the composition, of catalyst.

12. The curable and electrochemically debondable two-component (2K) adhesive composition according to any one of claims 1 to 11 comprising from 0.5 to 10 wt.%, based on the weight of the composition, of electrically non-conductive particulate filler.

13. A bonded structure comprising
a first material layer having an electrically conductive surface;
a second material layer having an electrically conductive surface;
wherein a cured electrochemically debondable two component (2K) adhesive composition as defined in any one of claims 1 to 12 is disposed between the first and second material layers.

14. A method of debonding said bonded structure according to claim 13, the method comprising the steps of:
1) applying a voltage across both surfaces to form an anodic interface and a cathodic interface; and
2) debonding the surfaces,
wherein the voltage applied in step 1 is preferably from 0.5 to 200 V and it is preferably applied from 1 second to 60 minutes.
